# EUROPEAN PATENT SPECIFICATION

(11) **EP 1 627 849 B1**
(45) Date of publication and mention of the grant of the patent: **03.09.2008**
(21) Application number: 05255094.4
(22) Date of filing: 17.08.2005
(51) Int. Cl.: B67D 1/08

(54) **Beverage dispense system**
Getränkeabgabevorrichtung
Système de distribution de boissons

(30) Priority: 17.08.2004 GB 0418297
(43) Date of publication of application: 22.02.2006
(73) Proprietor: IMI CORNELIUS (UK) LIMITED, Alcester Warwickshire B49 6EU (GB)
(72) Inventor: Cook, Christopher Michael, Redditch, Worcestershire B98 7YX (GB); Willis, Anthony, Inkberrow, Worcester WR7 48B (GB); Williams, Graham Frederick, Solihull, West Midlands B90 4JR (GB)
(74) Representative: Wightman, David Alexander

(56) References cited:
- EP-A- 1 148 023
- WO-A-20/04016545
- GB-A- 2 205 638
- GB-A- 2 208 918
- GB-A- 2 249 380
- GB-A- 2 323 153
- GB-A- 2 400 597
- US-A- 4 679 408

## Description

This invention concerns a beverage dispense system, as defined in the preamble of claim 1. Such a system is known from GB- A-2249380. The invented system is suitable for dispensing chilled beverages, and in particular, but not exclusively chilled alcoholic beverages such as beer, lager, cider and the like.

Dispense systems are known for dispensing chilled beer and lager. Currently, there is a trend to dispense chilled beer, lager and cider at temperatures just above those at which the product may freeze.

The present invention seeks to provide a beverage dispense system for dispensing chilled beverages at low temperatures that enables the dispense temperature to be controlled reliably and which can provide cooling for dispersing several beverages.

It is well known to provide beverage dispense systems with a coolant re-circulation loop through which coolant is circulated to provide cooling for different purposes. For example the re-circulation loop may prevent the beverage warming up in the beverage supply line between the beverage source and the point of dispense. Alternatively or additionally, the re-circulation loop may provide localised cooling at the point of dispense to form ice or condensation on the outer surface of a font. Usually, the re-circulation loop is configured during installation of the beverage dispense system with the result that it is difficult to accommodate changes to the layout of the beverage dispense system.

The present invention therefore also seeks to provide a cooling system for a beverage dispense system that can be configured to the requirements of a beverage dispense system during installation and/or can be re-configured to accommodate changes to the layout of the beverage dispense system in use.

Other aims and objects of the invention will be apparent from the description hereinafter of embodiments of the invention.

According to the invention, there is provided a beverage dispense system as defined in claim1.

The beverage in the supply line between the heat exchanger and the dispense point is cooled by heat exchange with coolant in the coolant line. The coolant line by-passes the heat exchanger to allow flow of coolant through the coolant line to cool the beverage between dispenses.

Preferably, full flow of coolant through the heat exchanger being permitted during dispense and inhibited or prevented between dispenses so that beverage remaining in the heat exchanger between dispenses does not freeze.

In a preferred arrangement, coolant flow is controlled by an on/off valve in response to the sensed flow of beverage so that the valve is opened in response to flow of beverage on initiation of the dispense and is closed on completion of the dispense. Preferably, the valve is an electrically operable solenoid valve although any other suitable on/off valve may be employed.

Means may be provided to adjust the flow of coolant and/or of beverage to control the effective cooling of the beverage to achieve a desired dispense temperature. For example a flow regulator responsive to beverage and/or coolant temperature.

Means may be provided to allow an intermittent flow of coolant between dispenses to prevent beverage remaining in the heat exchanger warming up to any appreciable extent. For example, the on/off valve may be opened for a short period of time to provide a burst or pulse of coolant through the heat exchanger to cool the static beverage in the heat exchanger. Such burst or pulse of coolant may be provided at timed intervals between dispenses, for example a 5 second flow of coolant every 5 minutes.

Preferably, the coolant is a glycol/water mixture supplied by a cooler employing a refrigeration unit to provide a sub-zero coolant temperature for cooling the beverage. The glycol content may be such as to prevent freezing of the coolant in the cooler at the sub-zero temperatures employed for beverage cooling, typically -3°C to -4°C. This may be achieved with a glycol content of 25% or higher by volume. In periods of high demand, however, the coolant temperature in the cooler may rise reducing the cooling efficiency.

In a preferred arrangement, we employ a lower glycol content typically 10% or lower by volume. We have found that at these lower concentrations of glycol, the water in the mixture freezes to form an ice bank incorporating liquid glycol within the ice so that the freezing point is depressed. It is believed the glycol coats the ice crystals as they form resulting in a sub-zero ice bank.

More especially, we have found that we can produce a sub-zero ice bank from a sub-zero glycol/water mixture at substantially the same temperature as the liquid glycol/water mixture, for example -3°C to -4°C. This sub-zero ice bank provides a reserve cooling capacity which can be used to maintain the temperature of the coolant during periods of high demand to prevent the coolant temperature rising. In this way, the coolant temperature can be stabilised and thereby the temperature of the dispensed beverage can be maintained more reliably.

Furthermore, the size of the cooler may be reduced with potential cost savings compared to a cooler having a higher glycol content such that freezing does not occur and a larger capacity of coolant is required to cope with periods of high demand. As a result, the space required to install the cooler is reduced and this may increase the options for installation. Moreover, reducing the glycol content of the coolant, reduces the viscosity of the coolant and this may allow a smaller pump to be used providing further potential energy cost savings and possible space saving and/or noise reduction.

The evaporator may be of coiled construction in the form of a spiral loop and the thickness of the ice bank may be controlled by a temperature sensor such as a thermostat or thermocouple positioned a set distance from the coils such that, when the ice bank has grown beyond the position of the temperature sensor, the temperature sensed is a point on the temperature gradient between the temperature of the evaporator coils and the temperature of the ice bank/liquid coolant interface. The temperature can be selected to switch off the refrigeration unit when a desired thickness of ice has been formed on the coils and which prevents the refrigeration unit short cycling or running continuously too long.

The ratio of glycol to water may be set on initial installation by measuring the amount (volumes) of glycol and water added to the tank. The ratio can be adjusted during commissioning by adding more glycol or water depending on the steady state temperature that is achieved. In use, the tank may require topping up to replace coolant that is lost due to leaks or other reasons, for example due to absorption of moisture (water) that effectively dilutes the glycol content.

When the ice bank forms, the ratio of glycol to water in the liquid coolant will change. We may therefore prefer to defrost the evaporator at regular intervals, say every 24 hours, to return all the coolant to liquid form. This may be done overnight when the ice bank is not required. In this way, the quality of the ice bank that is formed can be maintained.

We may also check the level of coolant and/or the ratio of glycol to water in the mixture at the same time or at some other regular interval, say weekly to see if any addition of glycol and/or water is required. The ratio of glycol to water can be determined by any suitable means allowing the desired amounts (volumes) of glycol and water to be added to top-up the tank to the required level. Any addition of water and/or glycol may be carried out automatically or by a service engineer when any change in the level and/or ratio exceeds pre-determined limits.

A convenient way of measuring the ratio of glycol and water is to use a refractometer. We may monitor the coolant level and the water/glycol ratio of the coolant and top-up the coolant with the appropriate amounts (volume) of water and glycol automatically.

The dispense point may comprise a plurality of dispense taps each connected to a supply line connected to a source of beverage and each supply line may be provided with a heat exchanger for cooling the beverage.

Preferably, the heat exchangers are connected in parallel between supply and return lines of a re-circulation loop for circulating coolant through individual heat exchangers and, where required, the loop may include a line by-passing the heat exchangers to provide additional trace cooling downstream of the heat exchangers to prevent the beverage warming up, especially between dispenses.

The heat exchangers may be adapted to cool the beverages to the same temperature or different temperatures for dispense. For example, the effective rate of cooling of the beverage, and thus the temperature of the chilled beverage, may be controlled by altering the heat transfer area of the heat exchangers and/or the volume throughput of the beverage and/or coolant.

For systems requiring a large cooling capacity, for example systems having a large number of dispense taps, we may prefer to provide at least two coolers of smaller capacity in place of one large cooler having the same total capacity as the smaller coolers.

Preferably, multiple coolers are connected in parallel with an overflow connection linking the tanks so that, in use, the coolant levels in the tanks remain substantially the same. Multiple coolers may provide the system with a back-up capability and allow the system to continue operating to dispense beverages if one of the coolers fails or if one of the coolers is in a defrost cycle.

Furthermore, multiple coolers, can be operated together, for example when the system is dispensing beverages, especially in periods of high demand and, at other times when the system is not dispensing beverages, only one cooler may be required to provide sufficient trace cooling capacity, for example overnight.

In this way, a power saving may be achieved when only one pump is running. Moreover, when only one cooler is required, the system may operate the coolers alternately (flip-flop) . This reduces the time each pump is operating and may improve the life of the pumps. Also, failure of a pump/cooler may be readily detected when operating the pumps alternately and the system switched to operate with the other pump(s)/cooler(s) until a repair is effected.

Other features, benefits and advantages of the invention will be more fully understood from the description hereinafter of exemplary embodiments.

Embodiments of the invention will now be described in more detail, by way of example only, with reference to the accompanying drawings wherein:-
**FIGURE 1** is a diagrammatic view of a beverage dispense system according to the invention;
**FIGURE 2** shows a cooler for use in the system of Figure 1;
**FIGURE 3** is a schematic view of another beverage dispense system according to the invention;
**FIGURE 4** is a schematic view, to an enlarged scale of part of the system shown in Figure 3;
**FIGURE 5** is a diagrammatic view, to an enlarged scale, showing the trace cooling for the supply lines to the taps of one of the towers shown in Figure 3;
**FIGURE 6** is a diagrammatic view, to an enlarged scale, showing detail of the installation of the system shown in Figure 3;
**FIGURE 7** is a schematic view showing a modification to the dispense system shown in Figures 3 to 5; and
**FIGURE 8** is a schematic view of another dispense system according to the invention.

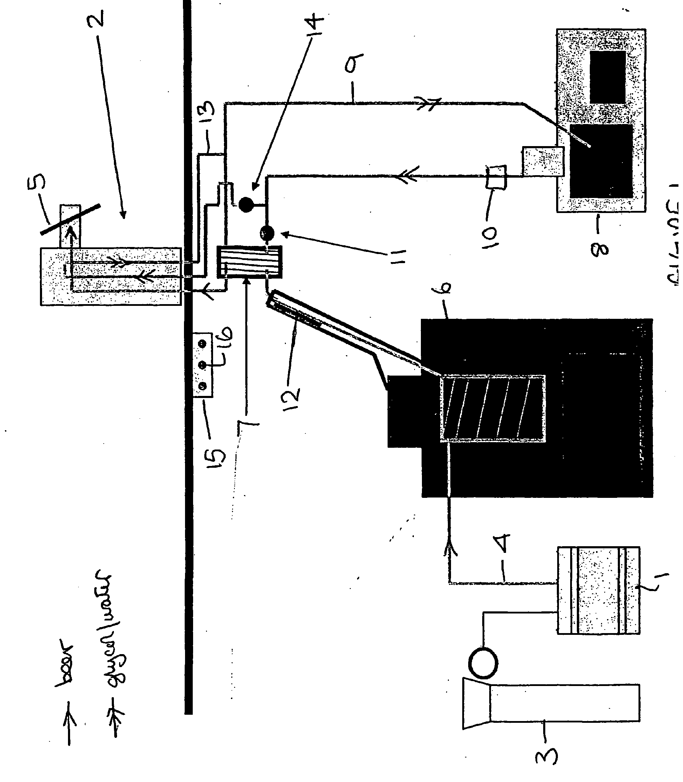

Referring first to Figure 1 of the drawings, there is shown a beverage dispense system for dispensing a cooled beverage, in this case beer, but it will be understood that the invention has application to the dispense of other beverages, for example alcoholic liquids such as lager, cider, stout and non-alcoholic beverages such as colas.

The beer is stored in a keg 1 typically located in a cellar or other temperature controlled environment remote from the point of dispense, for example a counter top fitting such as a font or tower 2 located in a bar. The keg 1 is connected to a source of pressurised gas, for example a carbon dioxide cylinder 3 for driving the beer from the keg 1 through a supply line 4 connecting the keg 1 to a tap 5 on the font 2 when the tap 5 is opened for dispense into a glass (not shown) placed below the tap 5.

The supply line 4 from the keg 1 passes through a cooler 6 which may also be located in the cellar to cool the beer to a temperature a few degrees above the desired dispense temperature. In this embodiment, the cooler 6 is an ice bank cooler containing water chilled in known manner by an evaporator coil (not shown) of a refrigeration unit. The water is maintained at a temperature close to 0°C and an ice bank is formed on the evaporator coil (not shown) of the cooler 6 to provide additional cooling capacity during periods of high demand to prevent the water in the cooler warming up to any appreciable extent. Such ice bank coolers are well known in the art and need not be further described.

From the cooler 6, the supply line 4 passes in a so-called "python" (not shown) to a plate heat exchanger 7 located in the bar close to the font 2, typically under the counter below the font 2. The beer is prevented from warming up in the python by circulating water from the cooler 6 through the python in a water re-circulation loop (not shown). Again "pythons" are well known in the art and need not be further described.

From the plate heat exchanger 7, the supply line 4 passes to the font 2 and is connected to the dispense tap 5. The beer in the supply line 4 passes through one side of the heat exchanger 7 and is further cooled by heat exchange with a coolant passed through the other side of the heat exchanger 7.

In this embodiment, the coolant is a glycol/water mixture that circulates between the heat exchanger 7 and a glycol cooler 8 in a re-circulation loop 9. The loop 9 includes a strainer 10 on the outlet side of the cooler 8 for removing any particulate material from the coolant flowing from the cooler 8 which may cause an obstruction to the flow of coolant. In other embodiments, the coolant may be a water/alcohol mixture or a water/salt (brine) mixture.

The loop 9 also includes an on/off solenoid valve 11 on the inlet side of the heat exchanger 7 that is closed between dispenses. The on/off solenoid valve 11 is opened in response to flow of beer in the supply line 4 detected by a flow sensor 12 when the tap 5 is opened to initiate a dispense and is closed when the tap 5 is closed at the end of the dispense. In this way, beer is cooled to the desired dispense temperature by heat exchange with the coolant during dispense but is prevented from freezing in the heat exchanger 7 between dispenses.

The beer remaining in the heat exchanger 7 is prevented from warming up to any appreciable extent between dispenses by intermittently opening the solenoid valve 11 for a short period of time to provide pulses or bursts of coolant through the heat exchanger 7 to keep the beer at the desired dispense temperature without freezing.

The coolant re-circulation loop 9 is provided with a line 13 that by-passes the heat exchanger 7 and extends into the font 2. Coolant from the cooler 8 is circulated continuously through the line 13 to provide trace cooling of the beer in the supply line 4 between the heat exchanger 7 and the dispense tap 5 to prevent the beer warming up to any appreciable extent between dispenses.

The line 13 includes a flow adjuster 14 which can be set on installation to provide the required flow to maintain the temperature of the beer in the supply line substantially constant without causing the beer to freeze between dispenses. The coolant circulating in the line 13 may also be employed to cool the font 2 to cause condensation and/or ice to form on an outer surface of the font 2 to create interesting visual effects for the customer.

The glycol/water mixture provides coolant having a temperature below 0°C (sub-zero) due to the suppression of the freezing point of the water by the glycol. In this embodiment, the coolant contains approximately 10% glycol (by volume). We have found that this results in an ice bank being formed when the temperature of the coolant is of the order of -3°C to -4°C. The ice bank has a similar temperature and provides a reserve cooling capacity to maintain the optimum temperature of the coolant during periods of high demand. It will be understood, that the temperature of the coolant and of the resulting ice bank may be varied as desired by altering the ratio of glycol to water in the coolant.

The solenoid valve 11 and sensor 12 are connected to a control unit 15 provided with a switch 16 having two positions for switching the control unit 15 between the dispense mode of operation described above and a cleaning mode of operation where a cleaning fluid is passed through the supply line 4 to clean/sanitise the supply line 4 to prevent growth of bacteria or other contaminants in the supply line that may affect the taste and/or quality of the beer dispensed.

In the dispense mode of operation, the control unit 15 is responsive to the sensor 12 to open/close the solenoid valve 11 according to the presence/absence of flow in the supply line 4. When it is desired to clean the supply line 4, the supply line 4 is disconnected from the keg 1 and connected to a source of suitable cleaning fluid. The switch 16 is operated to switch the control unit 15 to the cleaning mode of operation in which the control unit 15 does not respond to the sensor 12 and the solenoid valve 11 remains closed. As a result, circulation of the glycol/water mixture through the heat exchanger 7 is prevented and the cleaning fluid does not freeze in the heat exchanger 7 during the cleaning cycle. The control unit 15 may provide a visual and/or audible warning to the user when the cleaning mode of operation has been selected, for example a warning light or buzzer. On completion of the cleaning cycle, the switch 16 is operated to switch the control unit 15 back to the dispense mode of operation.

This arrangement requires the user to manually operate the switch 16 to switch the control unit 15 to the cleaning mode of operation at the start of the cleaning cycle and to switch the control unit 15 back to the dispense mode of operation on completion of the cleaning cycle. There is a risk, if the user forgets to operate the switch 16, that the cleaning cycle may be initiated with the control unit 15 in the dispense mode of operation. As a result, the solenoid valve 11 will open allowing coolant to flow through the heat exchanger 7 in response to flow of the cleaning fluid detected by the sensor 12. The cleaning fluid may then freeze in the heat exchanger 7 which may take a lot of time and effort to clear.

Accordingly, in a modification (not shown), we may provide a sensor in the supply line that monitors the liquid flowing through the supply line and can distinguish between beer and cleaning fluid so as to operate the solenoid valve 11 automatically in response to the detected liquid flowing through the supply line 4. In this way, the solenoid valve 11 remains closed when cleaning fluid is detected in the supply line. The sensor may be operable to detect a parameter representative of a characteristic of the liquid flowing through the supply line, for example density, colour or some other characteristic that can distinguish between beer and cleaning fluid.

We may dispense with the manually operable switch for operating the solenoid valve 11 or we may provide the sensor as a back-up safety feature to prevent the solenoid valve 11 opening in the event cleaning fluid is introduced into the supply line with the control unit 15 set to the dispense mode of operation.

In a further modification (not shown), we may provide an isolation valve in the supply line 4 on the inlet side of the heat exchanger 7 that is normally open but which can be closed to allow the dispense tap 5 to be removed for cleaning or replacement. We may also arrange for the isolation valve to close if the sensor detects the presence of cleaning fluid in the supply line 4 when the control unit 15 is set in the dispense mode of operation. The sensor may also provide a visual and/or audible warning signal to tell the user that the dispense cycle has been interrupted.

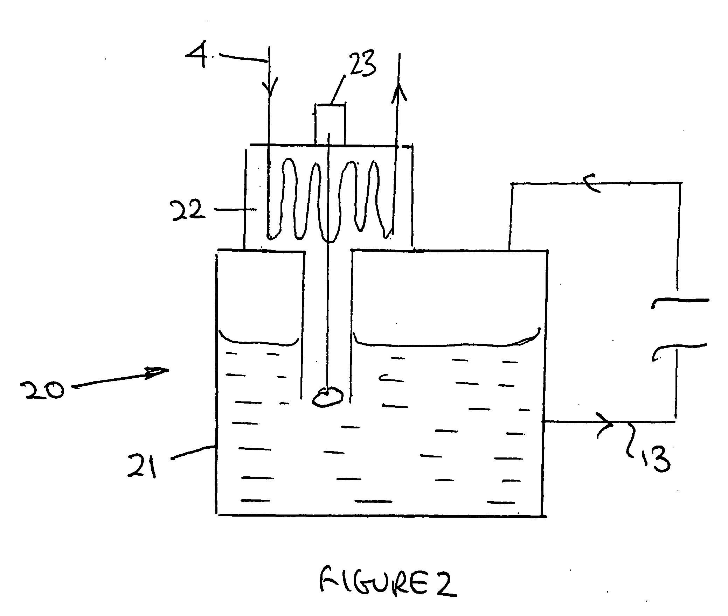

Referring now to Figure 2, there is shown an alternative cooler for use in the beverage dispense system of Figure 1. For convenience like reference numerals are use to indicate corresponding parts. In this embodiment, the plate heat exchanger 7 and cooler 8 are combined in a single unit 20.

As shown, the cooler 8 comprises a tank 21 containing the coolant and the heat exchanger 7 comprises a chamber 22 positioned on top of the tank and through which the beverage supply line 4 passes. The chamber 22 is empty between dispenses and, on initiation of a dispense, a pump 23 is actuated to draw coolant from the tank 21 into the chamber 22 to cool beverage flowing through the supply line 4. The pump 23 may be operated in similar manner to the on-off solenoid valve 11 of Figure 1 by employing a sensor to detect flow of beverage in response to initiation of a dispense. On completion of the dispense, the pump 23 is switched-off and coolant in the chamber 22 drains back into the tank 21. In this way, the heat exchanger 7 operates to cool beverage in the supply line 4 during a dispense cycle. Alternatively or additionally, the pump 23 may be operated in response to the temperature of the beverage in the supply line 4. For example, a sensor may be arranged to detect the temperature of the beverage in the supply line 4 within the chamber 22 and actuate the pump 23 when the temperature exceeds a pre-determined value. In this way, the beverage may be cooled during dispense and/or between dispenses. As a result, static beverage in the supply line within the chamber 22 is prevented from warming up between dispenses.

Trickle cooling of the supply line downstream of the heat exchanger 7 may be provided by circulating coolant from the tank 21 in a line 13 arranged in close proximity to the supply line 4 to prevent the beverage warming up, especially between dispenses. The system may include any of the other features of the system shown in Figure 1 such as a cleaning cycle in which the heat exchanger is inoperable to prevent freezing of cleaning fluid in the supply line.

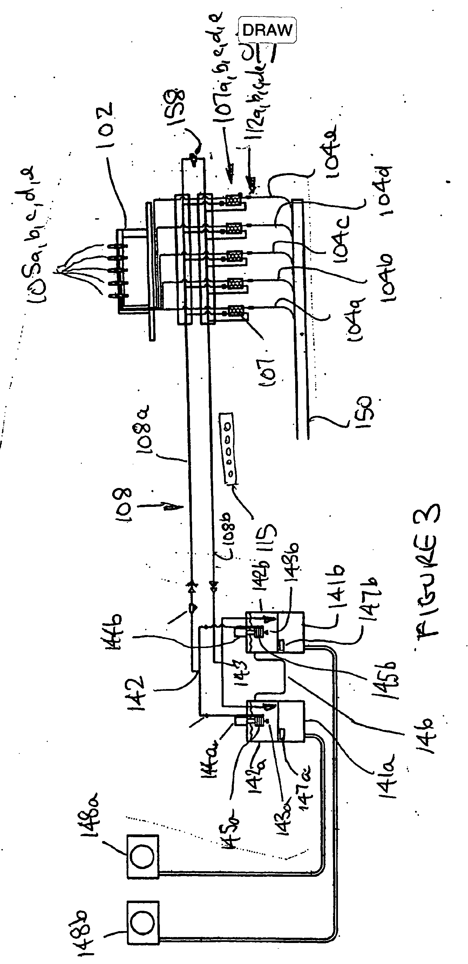

Referring now to Figures 3 to 6, there is shown a beverage dispense system that embodies features and principles of the system previously described with reference to Figure 1. Where convenient, like reference numerals in the series 100 are used to indicate parts corresponding.

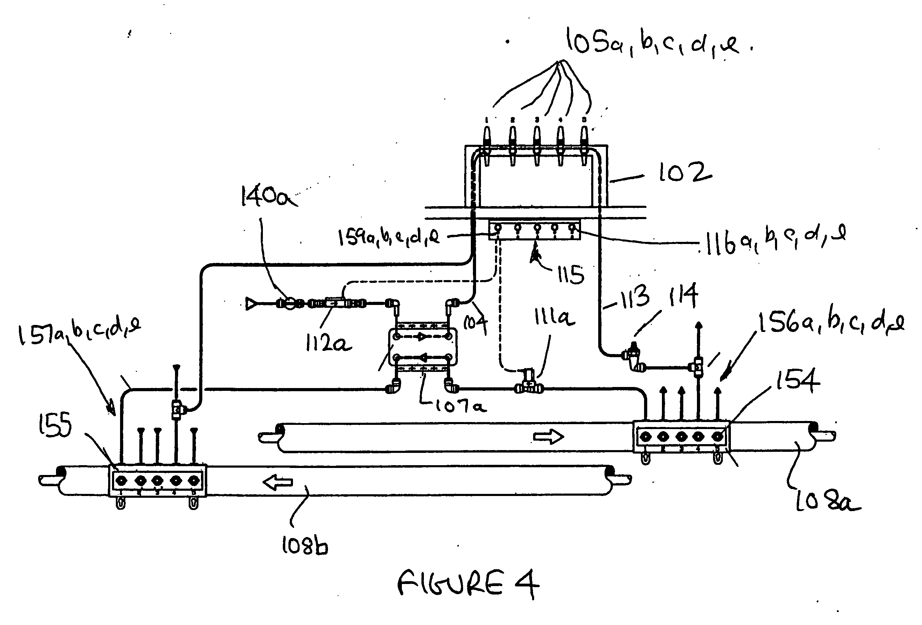

As best shown in Figures 3 and 4, a counter top fitting for mounting in a bar or similar dispense point is shown comprising a tower 102 provided with five dispense taps 105a,b,c,d,e. It will be understood that the number of taps may be varied as desired. Each tap 105a,b.c,d.e is connected to a separate source (not shown) of beverage by a respective supply line 104a,b,c,d,e. The sources may be kegs containing different types of beverage, for example beer (mild or bitter), lager, stout and/or different strengths and/or different brands of the same type of beverage.

The kegs are stored in a remote location such as a cellar and the supply lines 104a,b,c,d,e pass through a cooler such as an ice bank cooler in the cellar and are then bundled together in a python 150 together with a water re-circulation loop (not shown) to prevent the beverages warming up to any appreciable extent between the cellar and the bar.

The supply lines 104a,b,c,d,e break out of the python in the bar and are connected to the associated tap 105a,b,c,d,e via separate plate heat exchangers 107a,b,c,d,e respectively. The beverage in each supply line 104a,b,c,d,e passes through one side of the associated heat exchanger 107a,b,c,d,e and is cooled by heat exchange with coolant passing through the other side of the heat exchanger 107a,b,c,d,e.

Each supply line 104a,b,c,d,e includes a flow sensor 112a,b,c,d,e upstream of the associated heat exchanger 107a,b,c,d,e that provides a signal to a control unit 115 when beverage is flowing through the supply line 104a,b,c,d,e in response to opening the associated tap 105a,b,c,d,e to initiate a dispense.

Each supply line 104a,b,c,d,e also includes an isolation valve 140a,b,c,d,e upstream of the flow sensor 112a,b,c,d,e that allows the associated tap 105a,b,c,d,e to be removed for cleaning and/or replacement without draining the supply line 104a,b,c,d,e.

The coolant is a sub-zero glycol/water mixture that is circulated in a coolant re-circulation loop 108 including a supply line 108a and a return line 108b. The supply line 108a receives coolant from a pair of glycol coolers 141a, b connected in parallel to the supply line 108a via a T-connector 142 and the return line 108b returns coolant to the coolers 141a,b via a T-connector 143.

Each cooler 141a,b comprises a tank 142a,b containing a mixture of glycol/water coolant, an impeller 143a,b driven by a motor 144a,b for circulating the coolant within the tank 142a,b and an evaporator coil (not shown) of a refrigeration unit for controlling the temperature of the coolant in the tanks 142a,b.

Each motor 144a,b drives a pump 145a,b that passes coolant from the associated cooler 141a,b into the supply line 108a via the T-connector 142. The pumps 145a,b may be operated together or separately and non-return check valves (not shown) are provided upstream of the T-connector 142 to prevent coolant being pumped from one cooler to the other.

The tanks 142a,b are linked by an overflow tube 146 and the return flow of coolant to the tanks 142a,b is split at the T-connector 143 and is arranged to enter the tanks 142a,b below the surface of the coolant in the tanks 142a,b. As a result, the return flow will tend to keep the levels of coolant in both tanks 142a,b substantially the same when both coolers 141a,b are operating together or when only one of the coolers 141a,b is operating.

The refrigeration units (not shown) include electronic temperature controllers 147a,b set to provide a desired coolant temperature, for example -3°C to -4°C. Heat generated by the refrigeration units is dumped via waste heat coolers 148a,b. The water/glycol ratio may be such that the coolant does not freeze at these temperatures.

More preferably, the ratio is selected to produce a sub-zero ice bank on the evaporator coil so as to provide a preserve cooling capacity to accommodate peak loads during periods of high demand as described previously.

The heat exchangers 107a,b,c,d,e are connected in parallel between an inlet manifold 154 in the supply line 108a and an outlet manifold 155 in the return line 108b. The inlet manifold 154 receives coolant from the coolers 141a,141b and feeds the coolant to the inlet side of the heat exchangers 107a,b,c,d,e in separate lines 156a,b,c,d,e. The outlet manifold 155 receives coolant from the outlet side of the heat exchangers 107a,b,c,d,e in separate lines 157a,b,c,d,e and returns the coolant to the coolers 141a,141b.

Each line 156a,b,c,d,e is provided with an on-off solenoid valve 111a,b,c,d,e respectively connected to the control unit 115 for controlling coolant flow in response to beverage flow through the associated heat exchanger 107a,b,c,d,e. A pressure release or by-pass valve 158 downstream of the last heat exchanger 107e maintains pressure in the supply line 108a so that, when any-one of the solenoid valves is open, coolant flows through the associated heat exchanger 107a,b,c,d,e and, when all the solenoid valves are closed coolant can flow around the loop 108.

As best shown in Figure 4, the control unit 115 has five switches 116a,b,c,d,e. Each switch 116a,b,c,d,e is connected to a flow sensor 112a,b,c,d,e in the beverage supply line 104a,b,c,d,e and to the on-off solenoid valve 111a,b,c,d,e of the associated heat exchanger 107a,b,c,d,e. Each switch 116a,b,c,d,e has two positions, a dispense position and a cleaning position.

In the dispense position, the control unit 115 is responsive to opening/closing any one of the taps 105a,b,c,d,e detected by the associated flow sensor 112a,b,c,d,e to open/close the solenoid valve 111a,b,c,d,e of the associated heat exchanger 107a,b,c,d,e to allow/prevent coolant flow through the heat exchanger 107a,b,c,d,e. In this way, coolant flow through the heat exchanger is allowed during a dispense to cool the beverage being dispensed and is prevented between dispenses to stop static beverage freezing in the heat exchanger.

In the cleaning position, when any one of the taps 105a,b,c,d,e is opened to allow cleaning fluid to flow through the associated supply line 104a,b,c,d,e, the solenoid valve 111a,b,c,d,e of the associated heat exchanger 107a,b,c,d,e remains closed to prevent flow of coolant therethrough and stop the cleaning fluid freezing in the heat exchanger. In a modification (not shown), each supply line 104a,b,c,d,e may be provided with means for distinguishing between flow of product and flow of cleaning fluid and automatically preventing opening of the associated on-off solenoid valve when cleaning fluid is flowing through the supply line. Such means may be operable to detect a parameter representative of a characteristic of the liquid flowing through the supply line, for example density, colour or some other characteristic.

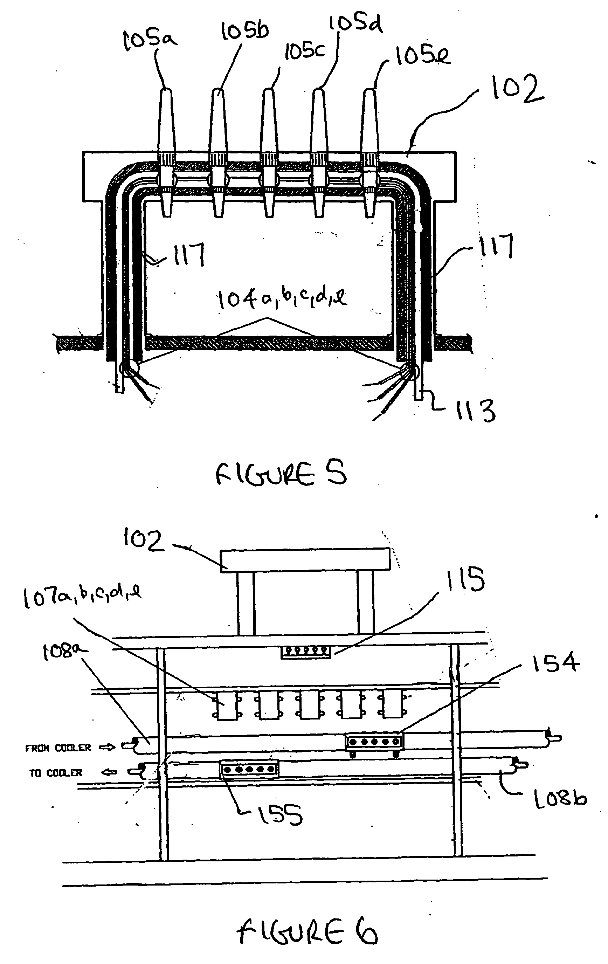

A typical under-counter lay-out of the control unit 115, heat exchangers 107a,b,c,d,e and manifolds 154,155 is shown in Figure 6. As shown, the switches 116a,b,c,d,e are provided with warning lights 159a,b,c,d,e that are illuminated when the associated switch is operated to select the cleaning mode of operation to provide a visual warning to the user at the point of dispense that the supply line 104 is being cleaned. The lights 159a,b,c,d,e may be LEDs.

The inlet and/or outlet manifolds 154, 155 may include adjuster means for setting the flow rate of the coolant through the associated heat exchanger 107a,b,c,d,e to control the effective cooling of the beverage and thus, the final temperature of the dispensed beverage. In this way, different beverages may be dispensed at different temperatures.

As also shown in Figures 4 and 5, a trickle flow of coolant is provided through the tower 102 by a line 113 that by-passes one of the heat exchangers, in this case heat exchanger connected between lines 156d,157d, to provide a continuous flow of coolant in close proximity to the supply lines 104a,b,c,d,e within the tower 102. The flow of coolant through the line 113 is controlled by a flow adjuster 114 that can be set on installation to provide a required cooling load. In this way, static beverage in the supply lines 104a,b,c,d,e downstream of the heat exchangers 107a,b,c,d,e is prevented from warming up between dispenses.

In this embodiment, the supply lines 104a,b,c,d,e and by-pass line 113 are surrounded by insulation 117 within the tower 102 to assist further in preventing the beverage warming up between dispenses. In a modification (not shown), the by-pass line 113 may also cause cooling of an outer surface of the tower 102 to cause condensation and/or ice to form on the outer surface.

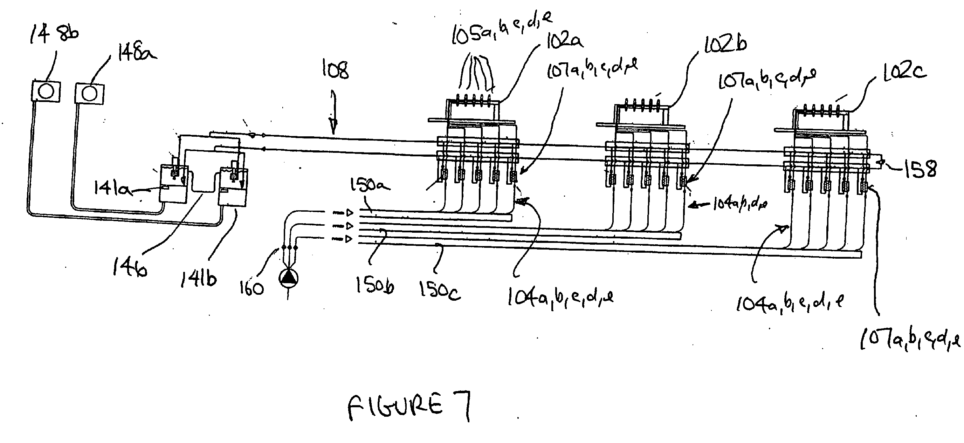

Referring now to Figure 7, there is shown a modification to the system shown in Figures 3 to 6. For convenience, like reference numerals are used to indicate corresponding parts.

In this embodiment, the system is expanded to provide three towers 102a,b,c each having five dispense taps 105a,b,c,d,e. The towers 102a,b,c may be located in the same bar or in different bars. The beverage supply lines 104a,b,c,d,e to each tower 102a,b,c are contained in separate pythons 150a,b,c that extend from the beverage sources to the associated tower 102a,b,c. The coolant re-circulation loop 108 is extended and provides connections to the heat exchangers 107a,b,c,d,e associated with each tower 102a,b,c and trickle cooling (not shown) to each tower 102a,b,c. The construction and operation of this system will be understood from the description of Figures 3 to 6. It will be appreciated that the twin coolers 141a,b have particular benefit in the system of Figure 7 where a large volume of coolant is required to provide cooling capacity for several dispense towers each having multiple dispense taps 105a,b,c,d,e.

Where two or more taps 105a,b,c,d,e on the same or different towers 102a,b,c are connected to a common source of beverage, non-return valves 160 are provided in the supply lines 104a,b,c,d,e upstream of the flow sensors 112a,b,c,d,e so that each flow sensor 112a,b,c,d,e only responds to opening of the associated tap 105a,b,c,d,e and is unaffected by opening of any other tap connected to the same beverage source. In this way, unintentional opening of a solenoid valve 111a,b,c,d,e permitting flow of coolant through a heat exchanger 107a,b,c,d,e when the associated tap 105a,b,c,d,e is closed and there is no flow of beverage is prevented.

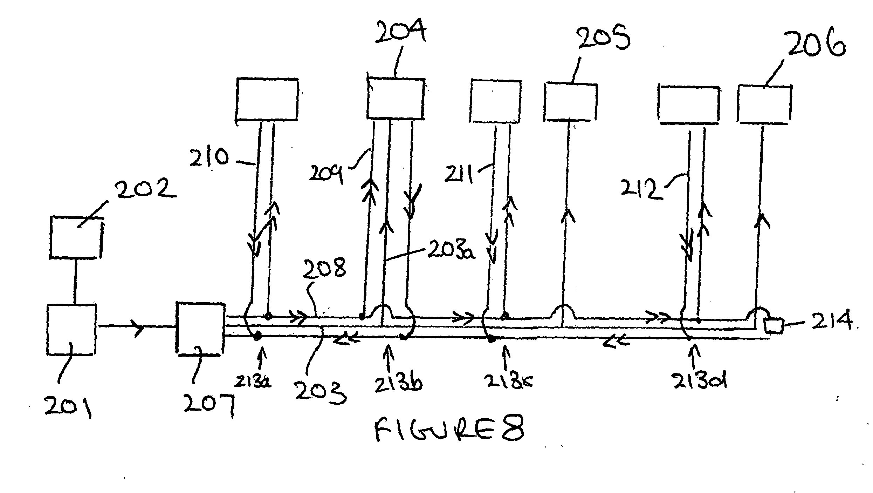

Referring now to Figure 8, there is shown another beverage dispense system comprising a beverage source 201 such as a beer keg connected to a source of pressurised gas 202 to drive the beer through a supply line 203 to a plurality of outlets 204,205,206 for dispensing the beer. The supply line 203 which is indicated by single headed arrows passes through a cooler 207 which may contain water, a glycol/water mixture or a binary ice (a flowable suspension of frozen water (ice) in an aqueous solution or mixture, for example a water/glycol mixture) for cooling the beer to a desired temperature. The keg 201 and cooler 207 are normally located in a cellar or other temperature controlled environment remote from the outlets 204,205,206.

It will be understood that any number of outlets and/or beverage supply lines may be provided according to particular requirements for a given installation and the arrangement shown is intended to illustrate the application of the invention without limitation to the system shown. It will also be understood that the system has application to the dispense of other beverages both alcoholic and non-alcoholic and we do not intended to be limited to the dispense of beer.

As shown, the cooler 207 supplies a coolant re-circulation loop 208 that is indicated by double headed arrows and is contained with the beverage supply line 203 in an insulated python that extends from the cellar to the bar area where the outlets are 204,205,206 are located. The coolant circulating in the loop 208 prevents the beverage warming up between the cellar and the bar area. The beverage may be further cooled between the python and the outlets 204,205,206 to a required dispense temperature by any suitable means (not shown) such as a thermoelectric device or a plate heat exchanger.

As shown the re-circulation loop 208 is connected to a plurality of branch or secondary loops 209,210,211,212 at spaced apart positions 213a,b,c,d along the length of the python. One of the branch loops 209 passes to the outlet 204 and circulation of coolant in the branch loop 209 may be used to prevent beverage warming up in the portion 203a of the supply line 203 between the python and the outlet 204 and/or to cause condensation and/or ice to form on the outside of the outlet 204. For example, the outlet 204 may comprise a font or similar counter top fitting where the formation of condensation and/or ice may create an interesting visual effect and/or provide additional cooling of the beverage. It will be understood that branch loops may be provided to the other outlets 205,206 in similar manner.

The other branch loops 210,211,212 pass to other equipment that may be provided in the bar area for a variety of purposes. For example, such equipment may include but is not limited to a juice bar, a back bar storage cabinet, an ice maker, a frozen beverage machine, a bottle chiller, a glass froster, a water chiller and any other equipment where circulation of coolant from the loop 208 may be employed.

The re-circulation loop 208 is provided at each position 213a,b,c,d with self-sealing connectors for releasable connection to mateable self-sealing connectors on the branch loops 209,210,211,212. The connectors may be of any suitable type that open automatically when the branch loop is connected and close automatically when the branch loop is disconnected. For example, the connectors may comprise one part of a plug and socket type coupling with the other part being on the branch loop. The coupling may be a quick-fit coupling that can be readily engaged/disengaged.

The connectors are provided at a plurality of positions spaced apart around the main re-circulation loop 208. allowing the branch loops to be selectively connected/disconnected at any point as required. In this way, the cooling system can be configured to suit the requirements of a particular installation and can be re-configured to accommodate changes to the installation, for example alterations to number, type and/or position of the outlets and/or of the other equipment employed in the bar area. As will be understood the provision of self-sealing connectors in the main re-circulation loop allows the cooling system to be readily adapted to suit different requirements throughout the life of the system. It will also be understood that the connectors can be used to connect branch loops to circulate coolant for other purposes, for example for cellar cooling/refrigeration, for air conditioning.

coolant flow through the branch loops 209,210,211,212 may be controlled by on/off solenoid valves (not shown) according to the cooling requirements and the main re-circulation loop 208 includes a pressure release or by-pass valve 214 downstream of the last branch loop 212 that maintains pressure in the main re-circulation loop upstream of the valve so that, when any-one of the solenoid valves is open, coolant flows through the associated branch loop and, when all the solenoid valves are closed coolant can flow through the valve 214.

Although the invention has been described with reference to preferred embodiments, it will be understood that the invention is not limited thereto and that features of any of the systems may be employed separately or in combination with features of any other system. For example, the sub-zero ice bank may be employed in any dispense system to provide sub-zero coolant for cooling a beverage prior to dispense. Similarly, the provision of multiple coolers of smaller capacity in place of one cooler having the same total capacity may be employed with any coolant in any dispense system. Likewise the combined cooler and heat exchanger may be employed with any coolant in any dispense system. Moreover, the self-sealing connectors in the coolant re-circulation loop may be employed in cooling systems for other beverage dispense systems employing a coolant re-circulation loop. We may also employ self-sealing connectors in a product line for connecting an outlet to the product line at a selected position. Other modifications and improvements will be apparent to those skilled in the art.

## Claims

1. A beverage dispense system for dispensing a chilled beverage such as beer, lager or cider, the system comprising a dispense point (5;105a,b,c,d,e) at a first location, a supply line (4;104a,b,c,d,e) for supply of beverage to the dispense point (5;105a,b,c,d,e) from a beverage source at a second location remote from the first location, a heat exchanger (7;107a,b,c,d,e) at the first location connected to the supply line (4;104a,b,c,d,e) and to a source of coolant (8;141a,b) for cooling the beverage to a desired temperature for dispense by heat exchange between the beverage and the coolant, and means (11,12;111a,b,c,d,e, 112a,b,c,d,e) for controlling the flow of coolant through the heat exchanger (7;107a,b,c,d,e) in response to initiation of a dispense, **characterised in that** a line (13;113) is provided that is connected to the coolant source (8;141a,b) and by-passes the heat exchanger (7;107a,b,c,d,e) to provide a continuous flow of coolant through the line (13;113) for trace cooling the beverage in the supply line (4;104a,b,c,d,e) between the heat exchanger (7;107a,b,c,d,e) and the dispense point (5;105a,b,c,d,e).

2. A beverage dispense system according to claim 1 wherein, full flow of coolant through the heat exchanger (7;107a,b,c,d,e) is permitted during dispense and is inhibited between dispenses, for example coolant flow is controlled by an on/off valve (11;111a,b,c,d,e) in response to the sensed flow of beverage so that the valve (11;111a,b,c,d,e) is opened in response to flow of beverage on initiation of the dispense and is closed on completion of the dispense.

3. A beverage dispense system according to claim 2 wherein means is provided to allow an intermittent flow of coolant between dispenses to prevent beverage remaining in the heat exchanger (7;107a,b,c,d,e) warming up to any appreciable extent, for example the on/off valve (11;111a,b,c,d,e) is operable intermittently for a short period of time to provide a burst or pulse of coolant through the heat exchanger (7;107a,b,c,d,e) to cool the static beverage in the heat exchanger between dispenses.

4. A beverage dispense system according to any one of the preceding claims wherein, means is provided to adjust the heat transfer area of the heat exchanger and/or the flow of coolant and/or of beverage to control the effective cooling of the beverage in the heat exchanger to achieve a desired dispense temperature,

5. A beverage dispense system according to claim 4 including a coolant re-circulation loop (9;108) for circulating coolant through the heat exchanger (7;107a,b,c,d,e) and the line (13;113) by-passing the heat exchanger (7;107a,b,c,d,e) comprises a branch loop connected to the re-circulation loop (9;108).

6. A beverage dispense system according to claim 5 wherein the coolant-re-circulation loop (208) includes a plurality of connector points (213a,b,c,d) for detachably connecting one or more secondary coolant re-circulation loops (209,210,211,212) associated with equipment having a cooling requirement.

7. A beverage dispense system according to claim 5 or claim 6 wherein the dispense point (105a,b,c,d,e) comprises a plurality of dispense taps each connected to a supply line (104a,b,c,d,e) connected to a source of beverage and each supply line (104a,b,c,d,e) is provided with a heat exchanger (107a,b,c,d,e) for cooling the beverage wherein, the heat exchangers (107a,b,c,d,e) are connected in parallel between supply and return lines (108a,b) of the coolant re-circulation loop (108).

8. A beverage dispense system according to any one of the preceding claims wherein, the coolant is a glycol/water mixture that provides a sub-zero coolant temperature for cooling the beverage and, means is provided to monitor the water/glycol ratio of the coolant and add appropriate amounts (volume) of water and glycol automatically to maintain the desired ratio.

9. A beverage dispense system according to any one of the preceding claims wherein the coolant forms a flowable binary ice mixture providing a cooling reserve for periods of high demand.

10. A beverage dispense system according to any one of the preceding claims including at least two coolers (141a,b) connected in parallel with an overflow connection (146) linking the coolers (141a,b) so that, in use, the coolant levels in the coolers (141a,b) remain substantially the same.

## Patentansprüche

1. Getränkeabgabevorrichtung zur Abgabe eines gekühlten Getränks, beispielsweise Bier, Lagerbier oder Apfelsaft, wobei die Vorrichtung einen Ausgabepunkt (5;105a,b,c,d,e) an einem ersten Ort, eine Versorgungsleitung (4;104a,b,c,d,e) zum Fördern des Getränks zum Ausgabepunkt (5;105a,b,c,d,e) von einer Getränkequelle an einem zweiten von dem ersten Ort entfernten Ort, einen Wärmetauscher (7;107a,b,c,d,e) an dem ersten Ort, der an die Versorgungsleitung (4;104a,b,c,d,e) und an eine Kühlmittelquelle (8;141a,b) zum Kühlen des Getränks auf eine gewünschte Temperatur für die Ausgabe durch Wärmetausch zwischen dem Getränk und dem Kühlmittel angeschlossen ist, und Mittel (11,12;111 a,b,c,d,e,112a,b,c,d,e) zum Steuern der Strömung des Kühlmittels durch den Wärmetauscher (7;107a,b.c,d,e) in Abhängigkeit zur Auslösung einer Abgabe umfasst, **dadurch gekennzeichnet, dass** eine Leitung (13;113) vorgesehen ist, die an die Kühlmittelquelle (8;141,a,b) angeschlossen ist und den Wärmetauscher (7;107a,b,c,d,e) umgibt, um eine kontinuierliche Strömung von Kühlmittel durch die Leitung (13;113) zu erzeugen, um eine Spurkühlung des Getränks in der Versorgungsleitung (4;104a,b,c,d,e) zwischen dem Wärmetauscher (7;107a,b,c,d,e) und dem Ausgabepunkt (5;105a,b,c,d,e) durchzuführen.

2. Getränkeabgabevorrichtung nach Anspruch 1, wobei eine volle Strömung des Kühlmittels durch den Wärmetauscher (7;107a,b,c,d,e) während der Ausgabe zugelassen und zwischen den Ausgaben verhindert ist, indem beispielsweise der Kühlmittelstrom durch ein Ein/Aus-Ventil (11;111a,b,c,d,e) in Abhängigkeit von der erfassten Strömung des Getränks gesteuert ist, so dass das Ventil (11;111a,b,c,d,e) in Abhängigkeit von der Strömung des Ventils bei der Auslösung der Ausgabe geöffnet und bei Abschluss der Ausgabe geschlossen ist.

3. Getränkeabgabevorrichtung nach Anspruch 2, wobei ein Mittel vorgesehen ist, um eine intermittierende Strömung des Kühlmittels zwischen den Ausgaben zu ermöglichen, um zu verhindern, dass sich in dem Wärmetauscher (7;107a,b,c,d,e) verbleibendes Getränk in einem merklichen Maße erwärmt, wobei beispielsweise das Ein/Aus-Ventil (11;111a,b,c,d,e) intermittierend über eine kurze Zeitspanne betätigbar ist, um einen Schwall oder Impuls von Kühlmittel durch den Wärmetauscher (7;107a,b,c,d,e) zu erzeugen, um das in dem Wärmetauscher statisch vorhandene Getränk zwischen den Ausgaben zu kühlen.

4. Getränkeabgabevorrichtung nach einem der vorstehenden Ansprüche, wobei ein Mittel vorgesehen ist, um die Wärmeübertragungsfläche des Wärmetauschers und/oder den Strom von Kühlmittel und/oder den Strom des Getränks zu verstellen, um das wirksame Kühlen des Getränks in dem Wärmetauscher zum Erreichen einer gewünschten Ausgabetemperatur zu steuern.

5. Getränkeabgabevorrichtung nach Anspruch 4, umfassend eine Kühlmittelrezirkulationsschleife (9;108), um das Kühlmittel durch den Wärmetauscher (7;107a,b,c,d,e) zu zirkulieren, wobei die Leitung (13;113), die den Wärmetauscher (7;107a,b,c,d,e) umgibt, eine abgezweigte Schleife umfasst, die an die Rezirkulationsschleife (9;108) angeschlossen ist.

6. Getränkeabgabevorrichtung nach Anspruch 5, wobei die Kühlmittelrezirkulationsschleife (208) eine Vielzahl von Anschlusspunkten (213a,b,c,d) enthält, um abnehmbar eine oder mehrere sekundäre Kühlmittelrezirkulationsschleifen (209,210,211,212) anzuschließen, welche mit Anlagenteilen, die gekühlt werden sollen, verbunden sind.

7. Getränkeabgabevorrichtung nach Anspruch 5 oder 6, wobei der Ausgabepunkt (1 05a,b,c,d,e) eine Vielzahl von Zapfhähnen aufweist, die je an eine Versorgungsleitung (104a,b,c,d,e) angeschlossen ist, welche an eine Getränkequelle angeschlossen ist, wobei jede Versorgungsleitung (104a,b,c,d,e) mit einem Wärmetauscher (107a,b,c,d,e) versehen ist, um das Getränk zu kühlen, wobei die Wärmetauscher (107a,b,c,d,e) parallel zwischen Zuführungs- und Rückführungsleitungen (1 08a,b) der Kühlmittelrezirkulationsschleife (108) angeschlossen sind.

8. Getränkeabgabevorrichtung nach einem der vorstehenden Ansprüche, wobei das Kühlmittel eine Glykol/Wasser-Mischung ist, welche eine unter dem Nullpunkt liegende Kühltemperatur zum Kühlen des Getränks liefert und dass ein Mittel vorgesehen ist, um das Wasser/Glykol-Verhältnis des Kühlmittels zu überwachen und um geeignete Mengen (Volumina) von Wasser und Glykol automatisch zuzugeben, um das gewünschte Verhältnis aufrechtzuerhalten.

9. Getränkeabgabevorrichtung nach einem der vorstehenden Ansprüche, wobei das Kühlmittel eine fließfähige binäre Eismischung bildet, welche eine Kühlreserve für Perioden hohen Bedarfs liefert.

10. Getränkeabgabevorrichtung nach einem der vorstehenden Ansprüche, umfassend mindestens zwei Kühler (141a,b), die parallel mit einer Überfließverbindung (146) angeschlossen sind, welche die Kühler (141a,b) derart verbindet, dass im Betrieb die Kühlmittelniveaus in den Kühlern (141a,b) im wesentlichen gleich bleibt.

## Revendications

1. Système de distribution de boissons pour distribuer une boisson réfrigérée, comme une bière, lager ou cidre, le système comprenant un point de distribution (5;105a,b,c,d,e) à un premier emplacement, un conduit d'alimentation (4;104a,b,c,d,e) pour l'amenée de la boisson au point de distribution (5;105a,b,c,d,e) d'une source de boisson à un deuxième emplacement éloigné du premier emplacement, un échangeur de chaleur (7;107a,b,c,d,e) au premier emplacement relié au conduit d'alimentation (4;104a,b,c,d,e) et à une source d'un agent de refroidissement (8;141a,b) pour refroidir la boisson à la température souhaitée pour la distribution par un échange de chaleur entre la boisson et l'agent de refroidissement, et des moyens (11,12;111a,b,c,d,e,112a,b,c,d,e) pour commander l'écoulement de l'agent de refroidissement à travers l'échangeur de chaleur (7;107a,b,c,d,e) en réponse à l'initiation d'une distribution, **caractérisé en ce qu'**un conduit (13;113) est prévu qui est relié à la source de l'agent de refroidissement (8;141a,b) et qui contourne l'échangeur de chaleur (7;107a,b,c,d,e) pour réaliser un écoulement continu de l'agent de refroidissement à travers le conduit (13;113) pour le refroidissement trace de la boisson dans le conduit d'alimentation (4;104a,b,c,d,e) entre l'échangeur de chaleur (7;107a,b,c,d,e) et le point de distribution (5;105a,b,c,d,e).

2. Système de distribution de boisson selon la revendication 1, dans lequel un écoulement complet d'agent de refroidissement à travers l'échangeur de chaleur (7;107a,b,c,d,e) est permis pendant la distribution et est empêché entre les distributions, par exemple l'écoulement de l'agent de refroidissement est commandé par une vanne marche/arrêt (11;111a,b,c,d,e) en réponse à l'écoulement détecté de la boisson de sorte que la vanne (11;111a,b,c,d,e) est ouverte en réponse à l'écoulement de la boisson lors de l'initiation de la distribution et est fermée lors de l'achèvement de la distribution.

3. Système de distribution de boisson selon la revendication 2, où un moyen est prévu pour permettre un écoulement intermittant de l'agent de refroidissement entre les distributions pour empêcher que la boisson qui subsiste dans l'échangeur de chaleur (7;107a,b,c,d,e) soit chauffée dans une mesure appréciable, par exemple, la vanne marche/arrêt (11;111a,b,c,d,e) peut être amenée à fonctionner par intermittence pendant une courte période de temps pour réaliser un jaillissement ou impulsion de l'agent de refroidissement à travers l'échangeur de chaleur (7;107a,b,c,d,e) pour refroidir la boisson statique dans l'échangeur de chaleur entre les distributions.

4. Système de distribution de boisson selon l'une des revendications précédentes, dans lequel un moyen est prévu pour régler la zone de transfert de chaleur de l'échangeur de chaleur et/ou l'écoulement de l'agent de refroidissement et/ou de la boisson afin de commander le refroidissement effectif de la boisson dans l'échangeur de chaleur pour atteindre une température de distribution souhaitée.

5. Système de distribution de boisson selon la revendication 4, incluant une boucle de recirculation d'agent de refroidissement (9;108) pour la circulation de l'agent de refroidissement à travers l'échangeur de chaleur (7;107a,b,c,d,e), et le conduit (13;113) contournant l'échangeur de chaleur (7;107a,b,c,d,e) comprend une boucle de branchement reliée à la boucle de recirculation (9;108).

6. Système de distribution de boisson selon la revendication 5, où la boucle de recirculation de l'agent de refroidissement (208) comprend plusieurs points de connection (213a,b,c,d) pour relier amoviblement une ou plusieurs boucles de recirculation d'agent de refroidissement secondaires (209,210,211,212) associées à un équipement ayant une exigence de refroidissement.

7. Système de distribution de boisson selon la revendication 5 ou la revendication 6, où le point de distribution (105a,b,c,d,e) comprend plusieurs robinets de distribution chacun relié à un conduit d'alimentation (104a,b,c,d,e) relié à une source de boisson, et chaque conduit d'alimentation (104a,b,c,d,e) présente un échangeur de chaleur (107a,b,c,d,e) pour le refroidissement de la boisson dans celui-ci, où les échangeurs de chaleur (107a,b,c,d,e) sont montés en parallèle entre des conduits d'alimentation et de retour (108a,b) de la boucle de recirculation (108) de l'agent de refroidissement.

8. Système de distribution de boisson selon l'une des revendications précédentes, dans lequel l'agent de refroidissement est un mélange glycol/eau qui fournit une température sous-zéro de l'agent de refroidissement pour refroidir la boisson, et un moyen est prévu pour surveiller le rapport eau/glycol de l'agent de refroidissement et pour ajouter des quantités appropriées (volume) d'eau et de glycol automatiquement pour conserver le rapport souhaité.

9. Système de distribution de boisson selon l'une des revendications précédentes, où l'agent de refroidissement forme un mélange de glace binaire apte à s'écouler constituant une réserve de refroidissement pour des périodes de forte demande.

10. Système de distribution de boisson selon l'une des revendications précédentes, incluant au moins deux refroidisseurs (141a,b) montés en parallèle avec une connection de débordement (146) reliant les refroidisseurs (141a,b) de sorte qu'en cours d'utilisation, les niveaux des agents de refroidissement dans les refroidisseurs (141a,b) restent sensiblement les mêmes.
